# EUROPEAN PATENT SPECIFICATION

(11) **EP 3 602 757 B1**
(45) Date of publication and mention of the grant of the patent: **08.03.2023**
(21) Application number: 17902129.0
(22) Date of filing: 21.03.2017
(51) Int. Cl.: H02K 29/00, H02K 7/08, H02K 21/16, F16C 33/58, F16C 19/06

(54) **BRUSHLESS MOTOR**
BÜRSTENLOSER MOTOR
MOTEUR SANS BALAIS

(43) Date of publication of application: 05.02.2020
(73) Proprietor: TTI (Macao Commercial Offshore) Limited, Macao (MO)
(72) Inventor: LEE, Hei Man Raymond, Hong Kong (CN); WANG, Nan, Dongguan Guangdong 523960 (CN); LI, Zheng, Dongguan Guangdong 523960 (CN); WANG, Li Feng, Dongguan Guangdong 523960 (CN)
(74) Representative: Novagraaf Group
(86) International application number: PCT/CN2017/077465
(87) International publication number: WO 2018/170726

(56) References cited:
- CN-A- 101 626 183
- CN-U- 202 957 679
- CN-U- 206 004 436
- DE-A1- 10 259 426
- DE-A1-102008 006 399
- DE-A1-102008 006 399
- DE-U1-202014 103 629
- JP-A- H1 023 704
- JP-A- 2014 192 951
- US-A- 5 045 738
- US-A- 5 924 855
- US-A1- 2013 307 455

## Description

### FIELD OF INVENTION

This invention relates to electric motors, and in particular to the stator and rotor structure of brushless motors.

### BACKGROUND OF INVENTION

Brushless motors have been widely used in electric appliances such as power tools since brushless motors provide a higher torque, reduce the noise and provide a longer lifetime as compared to brushed motors. Brushless motors are particularly useful for applications where high output speed is required.

However, traditional brushless motors suffer from certain disadvantages. When the rotational speed is high, the brushless motors tend to produce a sharp electromagnetic noise, which would severely affect the user experience. In addition, the rotor in traditional brushless motors creates a large unbalanced magnetic force which not only affects the dynamic balance of the rotor, but also reduces the working life of the bearing.

CN206004436U (UNIV SHANDONG) relates to a compound molecule is high-speed brushless direct current motor for pump. According to the abstract of this document a compound molecule is high -speed brushless direct current motor for pump, including brushless DC motor, brushless DC motor does not have rotor core, brushless DC motor comprises electric motor rotor and motor stator, electric motor rotor set up in inside the motor stator, electric motor rotor includes rotor dabber, permanent magnet and carbon fiber sheath, the rotor core off -axial sets up the permanent magnet, the permanent magnet is outside to be set up the carbon fiber sheath, motor stator includes stator core, stator winding, the last setting of stator core stator winding, the utility model has the advantages of reasonable design, the assembly is simple, the stable performance is reliable, efficient, is suitable for vacuum environment high -speed operation the down of compound molecule pump.

DE102008006399 (GROSCHOPP AG DRIVES & MORE [DE]) relates to a three phase machine e.g. brushless direct current motor, for use in fan motor application, has stator including coil system provided as rotary field coil, where machine is designed as asynchronous machine with active squirrel-cage rotor. According to the abstract of this document the machine has a stator including a coil system provided as a rotary field coil with tooth coils. The coils have a coil width corresponding to a groove division. The number of coils per groove and strand is a whole number. The machine is designed as an asynchronous machine with an active squirrel-cage rotor. The rotor is designed as a short-circuit squirrel-cage rotor.

DE10259426 (PRODEMA ANTRIEBSTECHNIK GMBH & [DE]) relates to a Brushless electronically-commutated DC motor for maritime applications, has permanent magnets arranged on circular path around rotor attached by bearing on base of pot-shaped stator. According to the abstract of this document the stator is pot-shaped, and the pot wall carries at least one ring of magnetic coils. Control circuitry is arranged on the inside of the pot base. The bearing for the rotor is arranged on the pot base. Each permanent magnet is arranged on the rotor, on a circular path defined by the circumference of the rotor, transverse to the rotor plane and parallel to the rotary axis of the rotor, defined by the bearing.

CN101626183 (XI AN HESHENG POWER TECHNOLOGY) relates to a Permanent magnet synchronous width speed regulation spindle motor. According to the abstract of this document a permanent magnet synchronous width speed regulation spindle motor which comprises a shell with a cooling air channel, a front flange and a back flange which are respectively arranged at both ends of the shell; the front flange and the back flange are respectively connected with a spindle by a bearing; the inner wall of the shell is provided with a stator; a coder is arranged at the back end of the spindle; the spindle is axially provided with a plurality of rotor modules in parallel; spacer rings are arranged between the plurality of rotor module. The spindle motor is characterized by reasonable and simple magnet circuit, apt to flux-weakening level, convenient productionmanufacturing, utilizes the reasonable compromise and optimization between the strength and volume of a magnet field to fully expand speed regulation range of constant power of the permanent magnet synchronous motor while giving play to characteristics of permanent magnet synchronous motor such as low-speed large torque, thus reducing causing the low-speed large torque and the constant power width speed regulation to be synchronously realized on the same permanent magnet synchronous motor.

CN202957679U (XIAMEN DAZHEN MOTOR CO LTD) relates to a Single-bearing motor structure. According to the abstract of this document the single-bearing motor structure comprises a casing and a rotating shaft of a rotor portion, wherein at least one end of the rotating shaft extends out of the housing, and a double-groove bearing is mounted in a position where the rotating shaft penetrates through the housing to support the rotating shaft. The double-groove bearing comprises a bearing body, a transverse channel is arranged along the axial direction so that the rotating shaft can penetrate through bearing body via the transverse channel, and two separate annular grooves are arranged along the channel in the bearing body to form a three-section support portion. The bearing is mounted at one end of the rotating shaft of the motor to form the single-bearing structure, compared with a prior double-bearing structure, one end bearing is saved, so that assembling efficiency is improved; and the double-groove bearing is employed, so that operational performance of the motor is the same as that of the motor with the prior double-bearing structure, which has the advantages of reasonable structure, safe and reliable performance, and the like.

JPH1023704 (MATSUSHITA ELECTRIC IND CO LTD) relates to a BRUSHLESS MOTOR. According to the abstract of this document in a magnetic fluid seal 12, a magnetic fluid 16 is held with magnetic force and a magnetic fluid seal holder 13 is made of a non-magnetic material, for example, aluminum and holds the magnetic fluid seal 12. This magnetic fluid seal 12 and the magnetic fluid seal holder 13 are sealed and fixed with an elastic material 15, preferably rubber. The elasticity of the elastic material 15 is obtainable by pressing a magnetic fluid protecting plate 14 into a hub 2. This structure enables heating cycles not to cause the leakage of the base oil of bearing grease and also enables improvement of outgassing. Furthermore, easy assembling in the manufacture realizes a high quality, cost-effective motor.

US 5 924 855 A relates to a motor with a bearing only on one side of the rotor.

### SUMMARY OF INVENTION

In the light of the foregoing background, it is an object of the present invention to provide an alternate brushless motor which eliminates or at least alleviates the above technical problems.

The above object is met by the combination of features of the main claim; the sub-claims disclose further advantageous embodiments of the invention.

One skilled in the art will derive from the following description other objects of the invention. Therefore, the foregoing statements of object are not exhaustive and serve merely to illustrate some of the many objects of the present invention. The scope of the invention is defined by the claims.

According to the present invention, there is provided a brushless motor as defined by claim 1, which, inter alia, contains a stator, and a rotor adapted to rotate with respect to the stator. The rotor contains a motor shaft which defines an axis of rotation of the rotor. The rotor is supported by a single bearing device which is closer to one end of the motor shaft than to the other end along a longitudinal direction of the motor shaft.

Preferably, the bearing device contains one or more bearings having an inner ring which is made integrally with the motor shaft as a single piece.

More preferably, the bearing device contains two bearings.

Adjacent to the other end of the motor shaft there are arranged magnets on the motor shaft.

There are two or more magnets arranged along the longitudinal direction which are separated by an isolating ring.

In another specific implementation the magnets are adhered to the motor shaft.

A balancing ring is arranged on the motor shaft between the magnets and the bearing device.

Preferably, the balancing ring is adhered to the motor shaft.

There are many advantages to the present invention. By adopting a 6-slots-2-poles structure, the brushless motor according to an embodiment of the present invention effectively reduces operational noise caused by iron loss and unbalanced pull. As a result, hours of use of the tool can be extended and also the working life of the motor can be improved. The present invention is particularly useful for motors having a rotational speed larger than 10,000 rpm, and especially when the rotational speed rises to 100,000rpm. On the other hand, in embodiments of the invention in which the rotor includes two semicircular magnets the rotor has a relatively small external radius, which reduces its rotational momentum and increases the rotational speed. The large slot size of the stator increases the dimensions of air channels, and thus facilitates heat dissipation.

Another advantage of the present invention is that the stator uses concentrated windings which are simple for assembling process. As the windings have a relatively small thickness, the amount of cooper wire required for making the windings can be significantly reduced, and the production difficulties are also reduced. In addition, the concentrated windings cause the armature magnetic field producing a substantially sinusoidal pattern, which effectively eliminates the harmonic components which produce the electromagnetic noises, and thus improves the user experience.

Moreover, the present invention includes the embodiment of a cantilever structure of the rotor. As the bearing(s) are only located on one end of the shaft, it prevents accumulative tolerances produced between the shaft, the bearings and the bearing chamber due to wobbling of shaft and differences in dimensions in the case of bearings located on both sides of the shaft. In addition, as the inner ring of the bearing is made as a single piece with the shaft, there is no mismatch error incurred when the bearing inner ring is press-fitted onto the shaft and the shaft pressed against the balls in the bearing. Therefore, the bearing is capable of rotating in a nearly ideal case, and the motor has a structure which minimizes the vibrations and noises during high-speed rotation.

### BRIEF DESCRIPTION OF FIGURES

The foregoing and further features of the present invention will be apparent from the following description of preferred embodiments which are provided by way of example only in connection with the accompanying figures, of which:
Fig. 1 is an illustration of the stator and rotor structure of the brushless motor in a cross-sectional view, according to a first embodiment of the present invention.
Fig. 2 shows the wiring diagram of the stator windings of the brushless motor in Fig. 1.
Fig. 3 shows a cross-sectional view of the rotor of a brushless motor according to a second embodiment of the present invention.

In the drawings, like numerals indicate like parts throughout the several embodiments described herein.

### DETAILED DESCRIPTION OF THE PREFERRED EMBODIMENTS

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

As used herein and in the claims, "couple" or "connect" refers to electrical coupling or connection either directly or indirectly via one or more electrical means unless otherwise stated.

Terms such as "horizontal", "vertical", "upwards", "downwards", "above", "below" and similar terms as used herein are for the purpose of describing the invention in its normal in-use orientation and are not intended to limit the invention to any particular orientation.

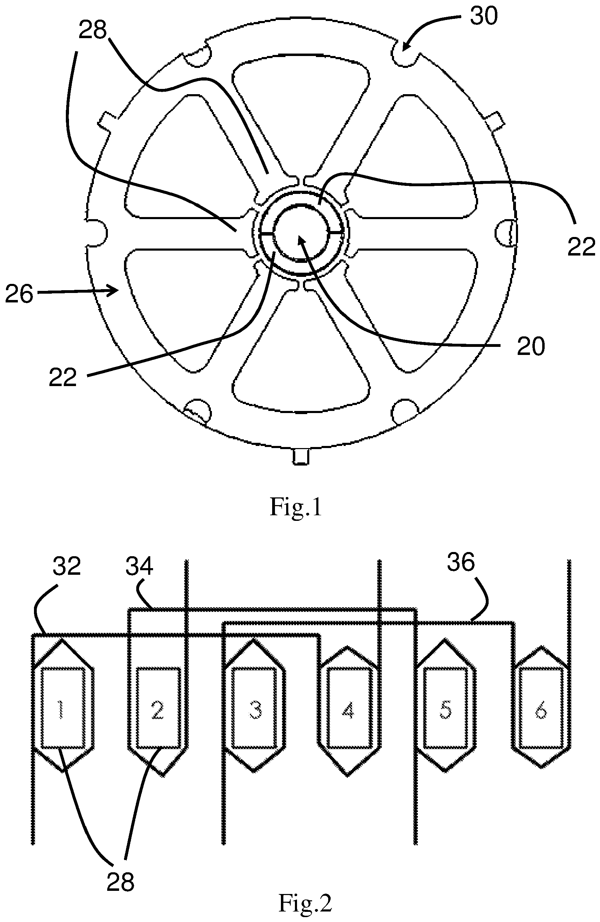

Referring now to Fig. 1, the first embodiment of the present invention is a brushless motor which includes a stator 26 and a rotor. The rotor is placed at the center of the motor and is adapted to rotate relative to the stator 26. The rotor includes a motor shaft 20 and a plurality of magnets 22 configured on the shaft 20. In particular, there are two semicircular magnets 22 configured on the shaft 20. On the stator 26, there are six slots 30 formed equidistantly around the perimeter of the stator 26. Corresponding to the angular positions of these slots 30 there are also six teeth 28 formed at the interior of the stator 26. There are windings (not shown in Fig. 1) wounded on each of these teeth 28 in concentrated manner.

Fig. 2 best illustrates the concentrated winding in the present invention. On each of the teeth 28, there is only a single set of winging out of three sets of windings for the three-phase brushless motor. For example, look along the circumferential direction and choose any one of the teeth as a starting point, then the 1st and 4th teeth 28 have the first set of windings 32 mounted thereon. The 2nd and 5th teeth 28 have the second set of windings 34 mounted thereon. The 3rd and 6th teeth 28 have the second set of windings 36 mounted thereon. In other words, on each of the teeth 28 there is no overlapping of two or more sets of windings.

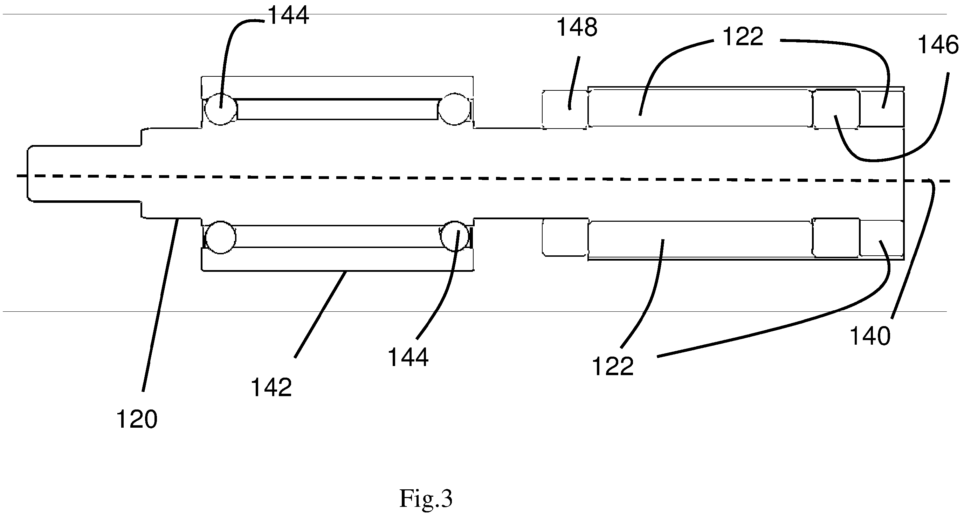

Referring now to Fig. 3, according to another embodiment of the present invention, a rotor of a brushless motor has a longitudinal direction defined by its axis 140 of rotation. The rotor includes a shaft 120 and a bearing device 142 located adjacent to one end of the shaft 120. The bearing device 142 further contains two bearings 144 separated from each other along the longitudinal direction within the bearing device 142. Note that the entire bearing device 142 is closer to one end of the shaft 120 (the left end as shown in Fig. 3) compared to the other end of the shaft 120 (the right end as shown in Fig. 3). It follows that each of the two bearings 144, no matter how far they are separated from each other, is also closer to one end of the shaft 120 compared to the other end of the shaft 120. The inner rings (not shown) of the two bearings 144 are manufactured integrally with the shaft 120, for example by using machining.

On the other end of the shaft 120 (the right end as shown in Fig. 3), magnets 122 are mounted on the shaft 120. In other words, the magnets 122 and the bearing device 142 are arranged substantially on two opposite ends of the shaft 120. Note that there are two or more magnets 122 arranged along the longitudinal direction and they are separated by an isolation ring 146. In addition, a balancing ring 148 is mounted on the shaft 120 approximately between the magnets 122 and the bearing device 142. Preferably, the balancing ring 148 is pressed against the end of magnet(s) 122 which directly faces the bearing device 142.

The exemplary embodiments of the present invention are thus fully described. Although the description referred to particular embodiments, it will be clear to one skilled in the art that the present invention may be practiced with variation of these specific details. Hence this invention should not be construed as limited to the embodiments set forth herein. The scope of the invention is defined by the claims.

While the invention has been illustrated and described in detail in the drawings and foregoing description, the same is to be considered as illustrative and not restrictive in character, it being understood that only exemplary embodiments have been shown and described and do not limit the scope of the invention in any manner. The scope of the invention is defined by the claims. It can be appreciated that any of the features described herein may be used with any embodiment. The illustrative embodiments are not exclusive of each other or of other embodiments not recited herein. Accordingly, the invention also provides embodiments that comprise combinations of one or more of the illustrative embodiments described above. Modifications and variations of the invention as herein set forth can be made without departing from the scope thereof, as defined by the claims, and, therefore, only such limitations should be imposed as are indicated by the appended claims.

## Claims

1. A brushless motor, comprising:
a) a stator (26);
b) a rotor adapted to rotate with respect to the stator; the rotor comprising a motor shaft (20, 120) which defines an axis (140) of rotation of the rotor;
wherein the rotor is supported by a single bearing device (142) which is closer to one end of the motor shaft than to the other end along a longitudinal direction of the motor shaft;
wherein adjacent to said other end of the motor shaft there are arranged magnets (22, 122) on the motor shaft;
wherein there are two or more said magnets arranged along the longitudinal direction which are separated by an isolating ring (146); and
wherein a balancing ring (148) is arranged on the motor shaft between the magnets and the bearing device.

2. The brushless motor of claim 1, wherein:
a) the stator includes six slots (30); and
b) the rotor includes two poles.

3. The brushless motor of claim 2, wherein the stator further comprises three sets of windings (32, 34, 36), each of which is wound on two of six teeth (28) of the stator (26) in a sequential manner.

4. The brushless motor of claim 3, wherein the three sets of windings (32, 34, 36) are connected at their tail ends using wye connection.

5. The brushless motor of any of claims 2 to 4, wherein the rotor comprises two semi circular-shaped magnets (22).

6. The brushless motor of claim 1, wherein the bearing device (142) comprises one or more bearings (144) having an inner ring which is made integrally with the motor shaft (20, 120) as a single piece.

7. The brushless motor of claim 6, wherein the bearing device (142) comprises two bearings (144).

8. The brushless motor of claim 1, wherein the magnets (22, 122) are adhered to the motor shaft (20, 120).

9. The brushless motor of claim 1, wherein the balancing ring (148) is adhered to the motor shaft (20, 120).

## Patentansprüche

1. Bürstenloser Motor, umfassend:
a) einen Stator (26);
b) einen Rotor, der angepasst ist, um sich in Bezug auf den Stator zu drehen; wobei der Rotor eine Motorwelle (20, 120) umfasst, die eine Drehachse (140) des Rotors definiert;
wobei der Rotor durch eine einzelne Lagervorrichtung (142) gestützt wird, die näher an einem Ende der Motorwelle liegt als an dem anderen Ende entlang einer Längsrichtung der Motorwelle;
wobei angrenzend an das andere Ende der Motorwelle Magnete (22, 122) auf der Motorwelle angeordnet sind;
wobei zwei oder mehr der Magnete entlang der Längsrichtung angeordnet sind, die durch einen Isolierring (146) getrennt sind; und
wobei ein Ausgleichsring (148) auf der Motorwelle zwischen den Magneten und der Lagervorrichtung angeordnet ist.

2. Bürstenloser Motor nach Anspruch 1, wobei:
a) der Stator sechs Schlitze (30) einschließt; und
b) der Rotor zwei Pole einschließt.

3. Bürstenloser Motor nach Anspruch 2, wobei der Stator ferner drei Sätze von Wicklungen (32, 34, 36) umfasst, von denen jede auf zwei von sechs Zähnen (28) des Stators (26) in einer sequenziellen Weise gewickelt ist.

4. Bürstenloser Motor nach Anspruch 3, wobei die drei Sätze von Wicklungen (32, 34, 36) an ihren Schwanzenden unter Verwendung einer Sternschaltung verbunden sind.

5. Bürstenloser Motor nach einem der Ansprüche 2 bis 4, wobei der Rotor zwei halbkreisförmige Magnete (22) umfasst.

6. Bürstenloser Motor nach Anspruch 1, wobei die Lagerungsvorrichtung (142) ein oder mehrere Lager (144) mit einem Innenring umfasst, der einstückig mit der Motorwelle (20, 120) ausgebildet ist.

7. Bürstenloser Motor nach Anspruch 6, wobei die Lagerungsvorrichtung (142) zwei Lager (144) umfasst.

8. Bürstenloser Motor nach Anspruch 1, wobei die Magnete (22, 122) an der Motorwelle (20, 120) befestigt sind.

9. Bürstenloser Motor nach Anspruch 1, wobei der Ausgleichsring (148) an der Motorwelle (20, 120) befestigt ist.

## Revendications

1. Moteur sans balais, comprenant :
a) un stator (26) ;
b) un rotor conçu pour tourner par rapport au stator ; le rotor comprenant un arbre de moteur (20, 120) qui définit un axe (140) de rotation du rotor ;
dans lequel le rotor est supporté par un dispositif de palier (142) unique qui est plus proche d'une extrémité de l'arbre de moteur que de l'autre extrémité le long d'une direction longitudinale de l'arbre de moteur ;
dans lequel, adjacents à ladite autre extrémité de l'arbre de moteur, sont disposés des aimants (22, 122) sur l'arbre de moteur ;
dans lequel il y a deux desdits aimants ou plus disposés le long de la direction longitudinale qui sont séparés par une bague d'isolation (146) ; et
dans lequel une bague d'équilibrage (148) est disposée sur l'arbre de moteur entre les aimants et le dispositif de palier.

2. Moteur sans balais selon la revendication 1, dans lequel :
a) le stator comporte six fentes (30) ; et
b) le rotor comporte deux pôles.

3. Moteur sans balais selon la revendication 2, dans lequel le stator comprend en outre trois ensembles d'enroulements (32, 34, 36), dont chacun est enroulé sur deux de six dents (28) du stator (26) de manière séquentielle.

4. Moteur sans balais selon la revendication 3, dans lequel les trois ensembles d'enroulements (32, 34, 36) sont reliés au niveau de leurs extrémités de queue à l'aide d'une liaison en étoile.

5. Moteur sans balais selon l'une quelconque des revendications 2 à 4, dans lequel le rotor comprend deux aimants de forme semi-circulaire (22).

6. Moteur sans balais selon la revendication 1, dans lequel le dispositif de palier (142) comprend un ou plusieurs paliers (144) ayant une bague interne qui est réalisée d'un seul tenant avec l'arbre moteur (20, 120) en une seule pièce.

7. Moteur sans balais selon la revendication 6, dans lequel le dispositif de palier (142) comprend deux paliers (144).

8. Moteur sans balais selon la revendication 1, dans lequel les aimants (22, 122) sont collés à l'arbre de moteur (20, 120).

9. Moteur sans balais selon la revendication 1, dans lequel la bague d'équilibrage (148) est collée à l'arbre de moteur (20, 120).
